# EUROPEAN PATENT APPLICATION

(11) **EP 3 040 649 A1**
(43) Date of publication of application: **06.07.2016**
(21) Application number: 15191794.5
(22) Date of filing: 28.10.2015
(51) Int. Cl.: F25B 23/00, F25B 7/00, F25B 25/00

(54) **AIR CONDITIONING WITH AUXILIARY THERMAL STORAGE**

(30) Priority: 29.12.2014 US 201414584062
(71) Applicant: HY-SAVE Limited, Midsomer Norton, Somerset BA3 4BH (GB)
(72) Inventor: Becker, Calvin, The Grange, Wiltshire BA14 9LE (GB)
(74) Representative: inCompass IP Europe Limited

(57) **Abstract**

A method of cooling includes cooling and compressing a refrigerant into a liquid state using a compressor and outside air handler then flowing the refrigerant in the liquid state through heat transfer tubes that are situated within a thermal storage, the thermal storage at least partially filled with a material, where the refrigerant extracts heat from the material as the refrigerant changes state from the liquid into a gas and the refrigerant in gaseous form returns to the compressor. The refrigerant also flows, in the liquid state, into an inside air handler where the refrigerant in liquid form extracts heat from air flowing through the inside air handler as the refrigerant changes into a gaseous state, which then flows back to the compressor where the compressor and outside air handler condenses the refrigerant back into the liquid state.

## Description

### Technical Field

This invention relates to air conditioners, and more particularly, to a thermal storage air conditioner in which a cold heat is produced and stored in a thermal storage device and later used for cooling a room or refrigerator, etc.

### Background Art

Air conditioning systems have been in place for many years. Typically, such systems comprise an outdoor heat exchanger that includes a compressor and evaporator, an expansion device, and an indoor heat exchanger where cooled refrigerant (e.g. liquefied refrigerant) changes phase to a gas, extracting heat from the air within the structure to make such a phase change.

In general, when the temperature within an air conditioned area reaches a predetermined temperature such as a setting on a thermostat, the compressor and air handler energize to cool the air conditioned area, until the temperature within the air conditioned area reaches another predetermined temperature, typically a few degrees below that set by the thermostat. In this way, an amount of hysteresis is provided to reduce start/stop cycles of the compressor and air handler, providing improved efficiency, operating life, and user experience.

Although there are many factors that affect efficiency and cost of operation, a few factors are considered here within. One factor that affects cost is the overall cost of electricity used in operating the compressor and air handler. These devices are motor-driven and typically consume many kilowatt hours per day. In some parts of the world, electricity prices are tiered, in that, during business hours (e.g. when businesses consume the most energy), the electricity rates are higher than during the hours that many businesses are closed and most people are sleeping. This presents an advantage in operating the air conditioning during these off-peak hours, but unfortunately, with conventional air conditioning systems, this would result in the air conditioned areas becoming too cold.

Another factor that needs consideration is temperature differential between the area being air conditioned and the outside ambient air. For example, when cooling an air conditioned area, the higher the ambient air temperature, the more the compressor needs to work to compress the refrigerant, and therefore, the more energy consumption. Generally, at night, the ambient air temperature cools, but the same situation occurs as above, in that, it is not practical to reduce the temperature in the air conditioned area beyond a certain low temperature.

Being that the compressor usually consumes a major portion of the overall electricity budget and the compressor will operate more efficiently when outside ambient air is lowest, there are many advantages to operating the compressor during off-peak hours, but to do so, an efficient way to store the cold heat is needed that does not require the compressor to run during peak (warmer) hours.

Prior systems utilizing thermal storage required the compressor operate to access the cold heat stored in the thermal storage. Further, such systems generally store cold heat (e.g. extract heat) in a fluid by decreasing the temperature of the fluid which has limited efficiency.

What is needed is a system that will efficiently store cold heat and retrieve the cold heat when conditions indicate a need to do such.

### Disclosure of Invention

In one embodiment, an air conditioning system is disclosed including a compressor and an outside air handler that is in fluid communications with the compressor. A thermal storage has a set of heat transfer tubes, a first end of which are in fluid communications with the outside air handler through a high pressure line and a second end which are in fluid communications with the compressor through a suction line. An inside air handler for cooling a structure has an input that is in fluid communications with the outside air handler through the high pressure line and an output that is in fluid communications with the compressor through the suction line. A fluid pump has an input and an output; the input being in fluid communications with the first end of each of the heat transfer tubes and the output being in fluid communications with the input of the inside air handler. When the compressor runs, a refrigerant is compressed into a liquid, cooled by the outside air handler and flows through the high pressure line into the heat transfer tubes where the refrigerant cools a material within the thermal storage and, in parallel, flows into the inside air handler where the refrigerant evaporates, extracting heat from air from within the structure to be cooled, and the refrigerant in gaseous form returns to the compressor through the suction line. In a first mode of operation, when cooling is needed, the pump operates and circulates the refrigerant in liquid form from the first end of the heat transfer tubes into the inside air handler through the high pressure line where the refrigerant extracts heat as it evaporates into a gas and the refrigerant in gaseous form returns to the thermal storage through the suction line where the refrigerant condenses back into a cold liquid. In a second mode of operation, when cooling is needed, the compressor operates and circulates the refrigerant in liquid form from the outside air handler and into the inside air handler through the high pressure line where the refrigerant extracts heat as it evaporates into a gas and the refrigerant in the gaseous form flows to the compressor through the suction line where the refrigerant is compressed and cooled back into a cold liquid.

In another embodiment, a method of cooling is disclosed including cooling and compressing a refrigerant into a liquid state using a compressor and outside air handler then flowing the refrigerant in the liquid state through heat transfer tubes that are situated within a thermal storage, the thermal storage at least partially filled with a material, where the refrigerant extracts heat from the material as the refrigerant changes state from the liquid into a gas and the refrigerant in gaseous form returns to the compressor. Also flowing the refrigerant in the liquid state into an inside air handler where the refrigerant in liquid form extracts heat from air flowing through the inside air handler as the refrigerant changes into a gaseous state, which then flows back to the compressor where the compressor and outside air handler condenses the refrigerant back into the liquid state.

In another embodiment, an air conditioning system is disclosed including a compressor having an input in fluid communications with a suction line and also having an output. An outside air handler has an input that is in fluid communications with the output of the compressor and has an output that is in fluid communications with a high pressure line. A thermal storage enclosed in a thermally insulated housing has heat transfer tubes that are at least partially within a material (e.g., submerged). A first end of the heat transfer tubes are in fluid communications with the high pressure line and a second end of the heat transfer tubes are in fluid communications with the suction line. An inside air handler has an input that is in fluid communications with the high pressure line and has an output that is in fluid communications with the suction line. An input of a fluid pump is in fluid communications with the first end of the heat transfer tubes and an output of the fluid pump is in fluid communications with the high pressure line. When the compressor runs, a refrigerant is compressed into a liquid, cooled by the outside air handler and flows into the first end of the heat transfer tubes where the refrigerant evaporates, extracting heat from the material within the thermal storage and the evaporated refrigerant returns to the compressor through the suction line. In parallel, the refrigerant in liquid form flows into the inside air handler where the refrigerant evaporates, extracting heat from air and the evaporated refrigerant returns to the compressor through the suction line. In a first mode of operation, when cooling is needed, the pump operates and circulates a refrigerant in liquid form from the second end of the heat transfer tubes into the inside air handler where the refrigerant extracts heat as it evaporates into a gaseous form and the refrigerant in the gaseous form returns to the second end of the heat transfer tubes within the thermal storage where the refrigerant condenses back into a cold liquid within the heat transfer tubes.

In another embodiment, an air conditioning system is disclosed including a compressor and an outside air handler that is in fluid communications with the compressor. The system includes a thermal storage having a first set of heat transfer tubes and a second set of heat transfer tubes. A first end of the first set of heat transfer tubes are in fluid communications with the outside air handler and a second end of the first set of heat transfer tubes are in fluid communications with the compressor. An inside air handler has an input and an output and a fluid pump having an input and an output. The input of the pump is in fluid communications with a second end of the second set of heat transfer tubes and the output of the pump is in fluid communications with the input of the inside air handler. The output of the inside air handler is in fluid communications with a first end of the second set of heat transfer tubes. When the compressor runs, a first refrigerant is compressed into a liquid, cooled by the outside air handler and flows into the first set of heat transfer tubes where the first refrigerant evaporates, extracting heat from a material within the thermal storage and the evaporated refrigerant returns to the compressor. When cooling is needed, the pump operates and circulates a second refrigerant in liquid form from the second end of the second set of heat transfer tubes into the inside air handler where the refrigerant extracts heat as it evaporates into a gas and the refrigerant in gaseous form returns to the thermal storage where the refrigerant condenses back into a cold liquid.

In another embodiment, a method of cooling is disclosed including cooling and compressing a first refrigerant into a liquid state using a compressor and outside air handler, then flowing of the first refrigerant in the liquid state through a first set of heat transfer tubes that are situated within a thermal storage. The thermal storage is at least partially filled with a material (e.g., antifreeze and water solution). The first refrigerant extracts heat from the material as the first refrigerant changes state from the liquid into a gas and then the first refrigerant in gaseous form returns to the compressor. A second refrigerant flows from a second set of heat transfer tubes that are also situated within the thermal storage. The second refrigerant flows into an inside air handler where the refrigerant in liquid form extracts heat from air flowing through the inside air handler as the second refrigerant changes into a gaseous state. The second refrigerant in the gaseous state then flows back to the second set of heat transfer tubes where temperatures within the thermal storage condense the second refrigerant back into the liquid state.

In another embodiment, air conditioning system is disclosed including a compressor having an input and an output and an outside air handler. An input of the outside air handler is in fluid communications with the output of the compressor. A thermal storage that is enclosed in a thermally insulated housing has a first set of heat transfer tubes and a second set of heat transfer tubes that are at least partially within a material (e.g. at least partially submerged within a material such as a solution of antifreeze and water). A first end of the first set of heat transfer tubes are in fluid communications with the output of the outside air handler and a second end of the first set of heat transfer tubes in fluid communications with the compressor. The system includes an inside air handler having an input and an output and a fluid pump also having an input and an output. The input of the pump is in fluid communications with a second end of the second set of heat transfer tubes, the output of the pump is in fluid communications with the input of the inside air handler, and the output of the inside air handler is in fluid communications with a first end of the second set of heat transfer tubes. When the compressor runs, a first refrigerant is compressed into a liquid, cooled by the outside air handler and flows into the first set of heat transfer tubes where the first refrigerant evaporates, extracting heat from the material within the thermal storage and the evaporated refrigerant returns to the compressor. When cooling is needed, the pump operates and circulates a second refrigerant in liquid form from the second end of the second set of heat transfer tubes into the inside air handler where the refrigerant extracts heat as it evaporates into a gas and the refrigerant in gaseous form returns to the thermal storage where the refrigerant condenses back into a cold liquid within the second set of heat transfer tubes.

### Brief Description of Drawings

The invention can be best understood by those having ordinary skill in the art by reference to the following detailed description when considered in conjunction with the accompanying drawings in which:
FIG. 1 illustrates a perspective view of a first in-line air conditioning system with in-line thermal storage.
FIG. 1A illustrates a perspective view of a second in-line air conditioning system with in-line thermal storage.
FIG. 2 illustrates a perspective view of an air conditioning system with auxiliary thermal storage.
FIG. 3 illustrates a perspective view of the internals of the auxiliary thermal storage.
FIG. 4 illustrates a perspective view of the internals of the in-line thermal storage.
FIG. 5 illustrates a perspective partially open view of the auxiliary thermal storage.
FIG. 6 illustrates a perspective partially open view of the in-line thermal storage.
FIG. 7 illustrates a schematic view of the first in-line air conditioning system with in-line thermal storage.
FIG. 7A illustrates a perspective view of the second in-line air conditioning system with in-line thermal storage.
FIG. 8 illustrates a schematic view of the air conditioning system with auxiliary thermal storage.
FIG. 9 illustrates a schematic view of an exemplary processing device as used in conjunction with the air conditioning system with thermal storage.
FIG. 10 illustrates a flow chart of an exemplary software system running on processing device as used in conjunction with the air conditioning system with thermal storage.
FIG. 11 illustrates a perspective view of an exemplary thermal fin design.

### Best Mode for Carrying Out the Invention

Reference will now be made in detail to the presently preferred embodiments of the invention, examples of which are illustrated in the accompanying drawings. Throughout the following detailed description, the same reference numerals refer to the same elements in all figures.

Note that throughout this description, an air conditioning system is described. In such, an air conditioning system is any system that conditions air with a temperature change, either making the air cooler (traditional) or warmer (reversed system). There is no limitation on the location of the air being conditioned such as within a building or room, within a chiller or "refrigerator," within a passenger compartment of a vehicle, within a cargo section of a tractor trailer or train, etc.

The system described provides air conditioning in any such scenario with the added benefit of performing extra work (e.g. drawing extra energy or electricity) during certain time periods to reduce the amount of work (e.g. drawing less energy or electricity) during other time periods. This is very useful in locations that have tiered energy costs (e.g., lower costs during evening hours), but also is very useful in locations that have constant energy costs but potentially wide outside ambient air temperatures (and/or humidity). For example, even in a location with constant energy costs, it is advantageous to operate the high energy consumption component (e.g. compressor) during the evening hours when the outside temperature is the coldest and then saving the cool heat in a storage cell for use during the daytime hours when the outside temperature is the warmest which requires more energy by the compressor to cool the target area. Likewise, in a vehicle, there are times when energy (e.g. from the fossil-fuel engine) is wasted such as while waiting for a traffic light, while there are times when very little surplus energy is available for cooling such as while accelerating or climbing a hill. There are many advantages in storing cool heat (e.g. running the compressor) while idling and utilizing the stored cool heat (without running the compressor) when other demands are made upon the vehicle's engine.

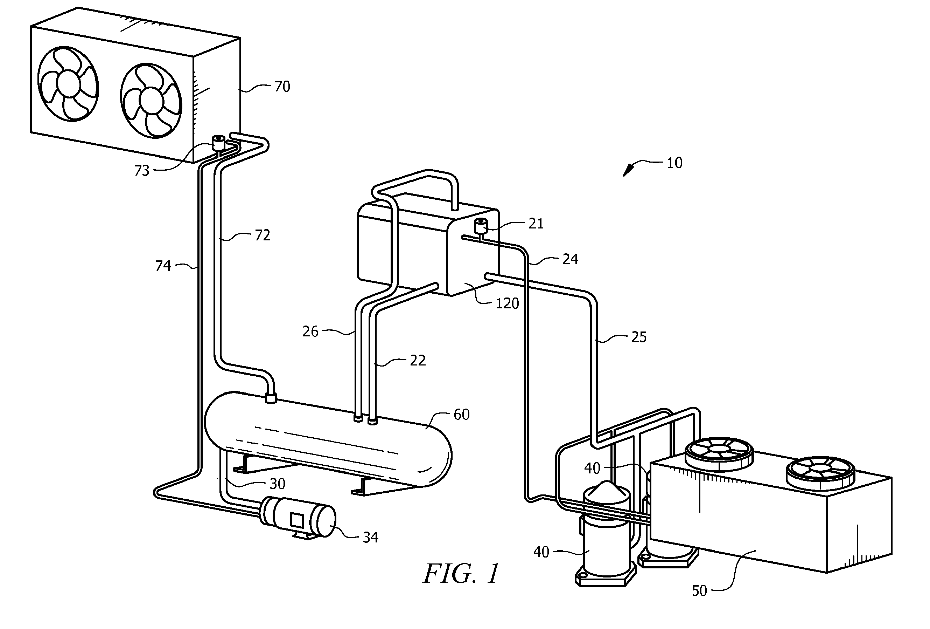

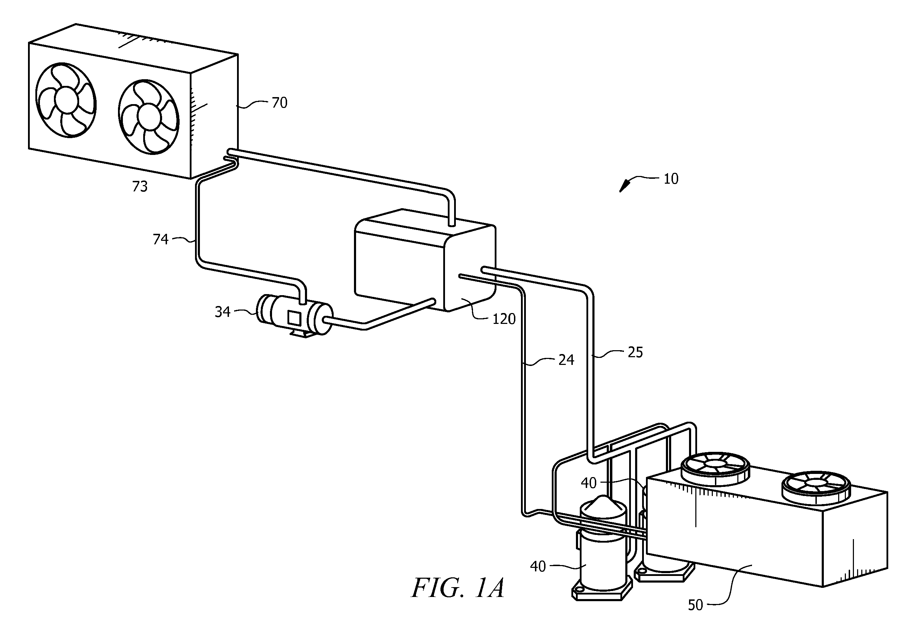

Although the air conditioning system describe is shown with an outside air handler 70 (see FIGS. 1-3), any known condensing system is anticipated including, for example, water-based in which water is circulated over the fins to cool the refrigerant (instead of air), or heat-pump systems which rely on the temperatures beneath the surface to cool the refrigerant.

Referring to FIGS. 1 and 1A, perspective views of an in-line air conditioning system 10 with thermal storage 120 is shown. Many of the components of the in-line air conditioning system 10 are similar to components of a conventional air conditioning system, but are used in a different manner.

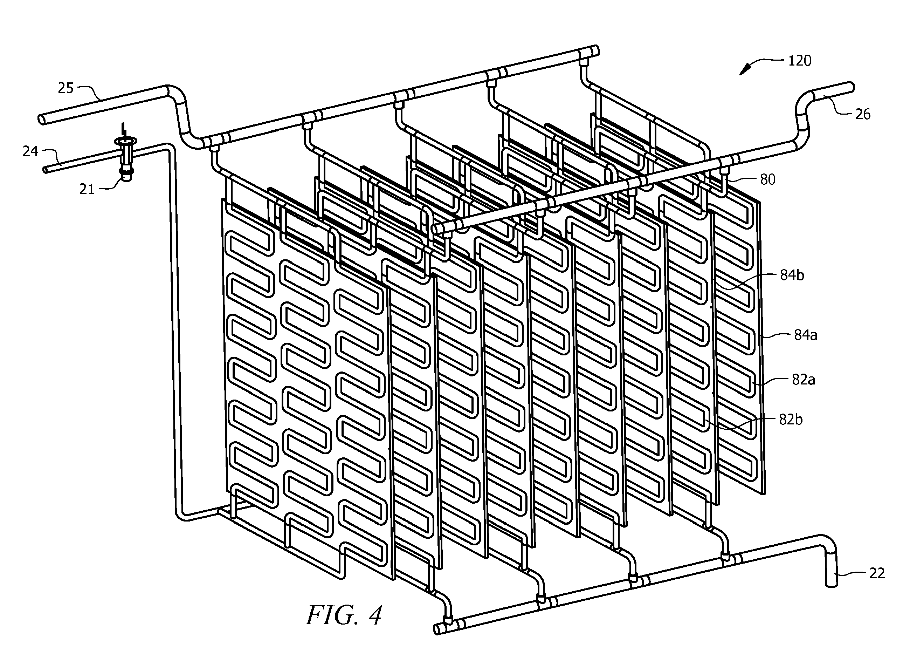

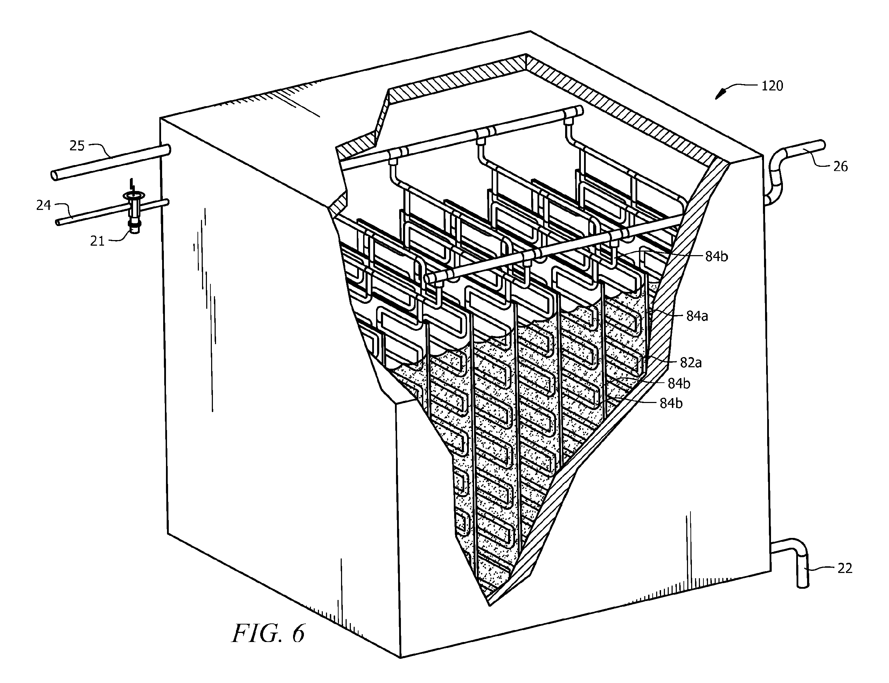

In the in-line air conditioning system 10 with thermal storage 120, the thermal storage 120 has two banks of thermal fins 84a/84b (see FIGS. 4 and 6) having heat transfer tubes 82a/82b for transferring cold heat to/from a refrigerant there within. A first set of the heat transfer tubes 82a transfer refrigerant to/from the compressor(s) 40 and a second set of heat transfer tubes 82b transfer refrigerant to/from the inside air handler 70. In this way, two independent types and chemistries of refrigerant are allowed, though in some embodiments, the refrigerant flowing through the first set of heat transfer tubes 82a is the same refrigerant flowing through the second set of heat transfer tubes 82b.

The in-line air conditioning system 10 includes thermal storage 120 that will be further described with FIGS. 4 and 6. The in-line air conditioning system 10 includes one or more typical compressors 40 (two are shown as an example), typically driven by an electric motor for home and office, but there is no limitation to the type of compressor(s) 40 and the way the compressor(s) 40 is/are driven (e.g., by a gasoline engine). The compressor(s) 40 have a low pressure suction line (vapor inlet line) 25 through which warm, gaseous refrigerant is received from the thermal storage 120. The compressors 40 then compress this gaseous refrigerant into a liquid state at a high pressure which is then passed through the outside air heat exchanger 50 where the liquid refrigerant is cooled by a flow of outside air over a series of fins (not shown), as known in the industry. The now cold, liquid refrigerant, under pressure, flows through the high pressure line 24 to the thermal storage 120. As the cold, liquid refrigerant flows through the first set of the heat transfer tubes 82a within the thermal storage 120, the refrigerant changes state from a liquid to a gas (evaporates), extracting heat (thermal energy) from the material 90 within the thermal storage 120, lowering the temperature of the material 90. At a certain temperature (freezing point of the material 90 based upon the physical properties of the material 90), the material 90 changes phase from a liquid to a solid. This phase change requires cooling energy above that needed to simply lower the temperature of the material 90, and therefore, stores that additional energy until the now solid material 90 warms above a certain temperature (melting point based upon the physical properties of the material 90). For completeness, an optional thermal expansion valve 21 is shown

Note that many typical components of a traditional air conditioning compressor 40 and outside air exchanger 50 such as reversing valves, thermal expansion devices, check valves, fans/motors to flow air over the fins, fins, etc., are not shown for clarity purposes as they are well known in the art.

An inside air handler 70 (coils, fins, motors not shown for clarity reasons) is located in the structure to be cooled such as in a living space, freezer compartment, refrigerator, vehicle passenger compartment, etc. The inside air handler 70 is similar or the same as such known in the industry.

In the example of FIG. 1, the compressor 40 is operated at a time desired (e.g. when electricity rates are lower) until the material 90 within the thermal storage 120 achieves the desired temperature. While the compressor 40 runs, cold first refrigerant from the compressor 40 and outside air handler 50 flows through the first set of heat transfer tubes 82a within the thermal storage 120 and cools and/or freezes the material 90 within the thermal storage 120. Once the desired temperature of the material 90 within the thermal storage 120 is achieved, the compressor 40 is stopped, requiring little or no further power.

Now, as the second refrigerant in gaseous form enters the thermal storage 120, the second refrigerant contacts the cold second set of heat transfer tubes 82b and condenses into a liquid. The condensed, cold liquefied second refrigerant flows through tubes 22 into a storage tank 60 (preferably insulated storage tank 60 or a Liquid Refrigerant Receiver 60 as known in the industry). As any of the second refrigerants within the storage tank 60 evaporate, the gaseous second refrigerant flows through another tube 26 into the thermal storage 120 where is it then condensed as described above.

The liquefied second refrigerant within the storage tank 60 is in fluid communications with a pump 34 through a tube 30. When cooling is required within the structure as determined by, for example, a thermostat or other temperature sensing device, the condensed, liquefied second refrigerant from the storage tank 60 is pumped into the inside air handler 70 through a high pressure line 74 and optionally, a thermal expansion valve 73. The inside air handler 70 receives the cooled, liquid second refrigerant through the second high-pressure line 74 and the liquid second refrigerant evaporates (changes state to a gas refrigerant) within the coils of the inside air handler 70, extracting heat from air flowing through the inside air handler 70. The now gaseous second refrigerant exits the inside air handler 70 through a second suction line 72 and returns to the storage tank 60, and eventually to the thermal storage 120 where it is again cooled and liquefied.

As the temperature of the material 90 within the thermal storage 120 rises, determinations are made as to whether the compressor 40 should be run. For example, if the outside air temperature is at an ideal temperature or if electricity rates are low, the compressor is run to cool the material 90 to the desired temperature. If the conditions are not right (e.g. electricity rates are high or outside air temperatures are not ideal), running of the compressor 40 is suppressed until cooling is no longer possible with the remaining cold heat energy stored in the thermal storage 120.

In the example of FIG. 1A, the compressor 40 is operated as in FIG. 1, at a time desired (e.g. when electricity rates are lower) until the material 90 within the thermal storage 120 achieves the desired temperature. While the compressor 40 runs, a first refrigerant (cold) from the compressor 40 and outside air handler 50 flows through the first set of heat transfer tubes 82a within the thermal storage 120 and cools and/or freezes the material 90 within the thermal storage 120. Once the desired temperature of the material 90 within the thermal storage 120 is achieved, the compressor 40 is stopped, requiring little or no further power.

Now, as the second refrigerant in gaseous form enters the thermal storage 120, the second refrigerant contacts the cold second set of heat transfer tubes 82b and condenses into a liquid form of the second refrigerant.

When cooling is required within the structure as determined by, for example, a thermostat or other temperature sensing device, the condensed, liquefied second refrigerant from the thermal storage 120 is pumped into the inside air handler 70 through a high pressure line 74 and optionally. The inside air handler 70 receives the cooled, liquid second refrigerant through the second high-pressure line 74 and the liquid second refrigerant evaporates (changes state to a gas refrigerant) within the coils of the inside air handler 70, extracting heat from air flowing through the inside air handler 70 to provide cool air within the structure (e.g., home, office, refrigerator). The now gaseous second refrigerant exits the inside air handler 70 through a second suction line 72 and returns to the thermal storage 120 where it is again cooled and liquefied.

Again, as the temperature of the material 90 within the thermal storage 120 rises, determinations are made as to whether the compressor 40 should be run. For example, if the outside air temperature is at an ideal temperature or if electricity rates are low, the compressor is run to cool the material 90 to the desired temperature. If the conditions are not right (e.g. electricity rates are high or outside air temperatures are not ideal), running of the compressor 40 is suppressed until cooling is no longer possible with the remaining cold heat energy stored in the thermal storage 120. For example, when outdoor temperatures are 23F or below, the condenser 40 and fans will operate, cooling the material 90 to, for example, the freezing point of the material 90. During this time, the pump 34 will operate as needed to maintain the desired temperature within the structure. Any surplus cooling due to lower ambient outside temperatures will be stored in the thermal storage 120. As the outside temperature increases above 23F, the system will favor extracting cold heat from the thermal storage 120 by operating only the pump 34 until the temperature within the thermal storage 120 increases to a point at which the compressor(s) 40 need be operated.

In a preferred embodiment, the liquid pump 34 is an LPA (Liquid Pressure Amplification) pump 34. Although a single thermal storage 120 is shown in FIGS. 1 and 1A, smaller, larger, serial and/or parallel thermal storage 120 are anticipated.

In some embodiments, the material 90 within the thermal storage is a chemical-based antifreeze material such as ethylene glycol or a mixture of such antifreeze and water for achieving the desired phase change temperature (e.g., freezing point). In some embodiments, the material 90 is made of a non-global warming fluid that is processed from the vegetable beetroot. There is no limitation to the material 90. By varying the antifreeze concentration level of the material 90, the antifreeze eutectic freezing temperature is set as desired. For example, a higher eutectic freezing temperature is used in air conditioning for chilling in the range of 25F to 30F, while a medium eutectic freezing temperature is used in air conditioning for chilling in refrigerators in the range of 15 to 20F as needed for fresh meats, dairy products, and a low eutectic freezing temperature is used in air conditioning for chilling in refrigerators in the range of 35F to -18F, typically in freezers for frozen meats, fish, poultry, etc.

It is fully anticipated that the first refrigerant be the same or different to the second refrigerant and either refrigerant is any know refrigerant in the industry. As a first example, the first refrigerant is Co2 fluid (R-744) and the second refrigerant is propane or ammonia (Nh3). As a second example, both the first refrigerant and second refrigerant is Co2 fluid (R-744).

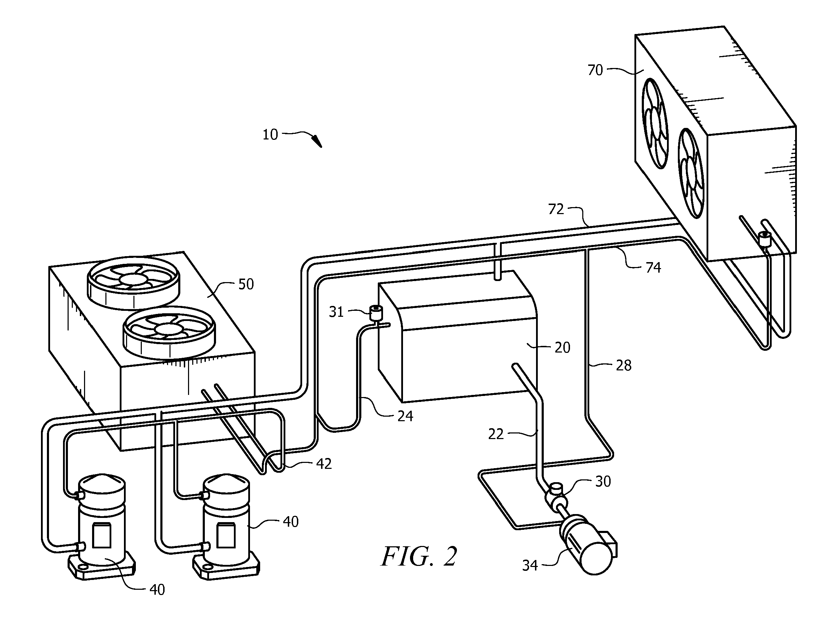

Referring to FIG. 2, a perspective view of an air conditioning system 10 with auxiliary thermal storage 20 is shown. The auxiliary air conditioning system 10 adds thermal storage 20 to an air conditioning system and, therefore, it is anticipated that in some embodiments, the thermal storage 20 is integrated or retrofitted into any existing air conditioning system.

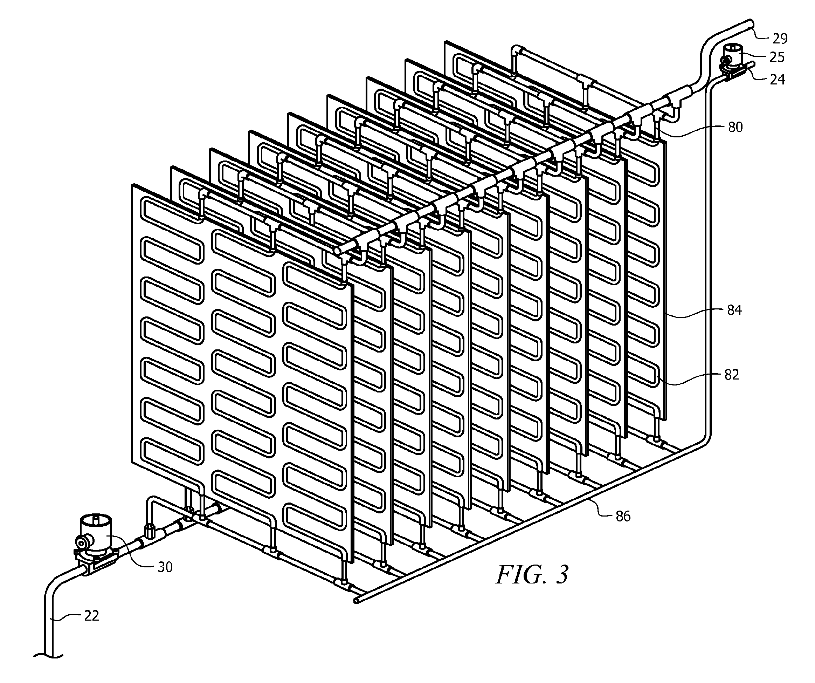

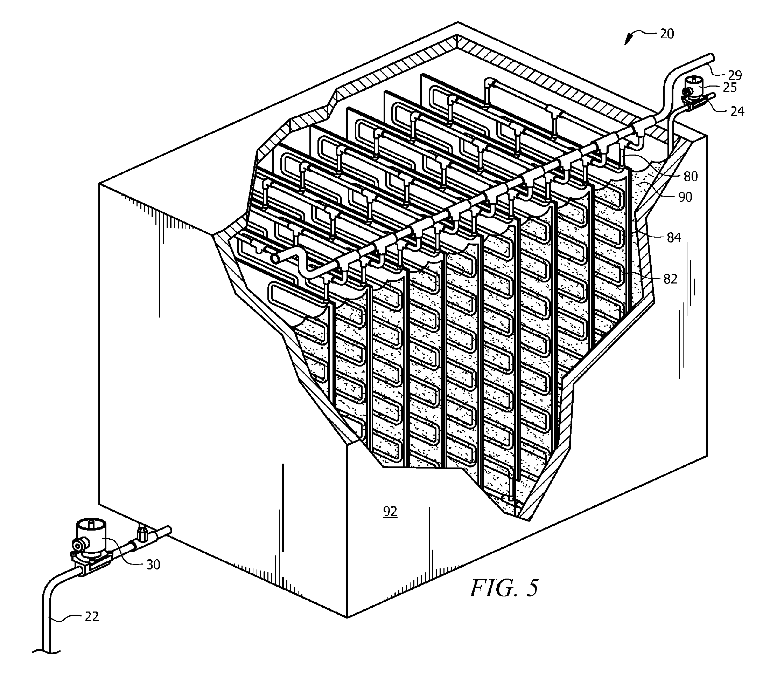

The exemplary auxiliary air conditioning system includes thermal storage 20 that will be further described with FIGS. 3 and 5. The auxiliary air conditioning system includes one or more typical compressors 40 (two are shown as an example), typically driven by an electric motor for home and office, but there is no limitation to the type of compressor(s) 40 and the way the compressor(s) 40 is/are driven (e.g., by a gasoline engine). The compressor(s) 40 have a low pressure suction line (vapor inlet line) 72 through which warm, gaseous refrigerant is received from the thermal storage 20 and/or the inside air handlers 70. The compressors 40 then compress this gaseous refrigerant into a liquid state at a high pressure which is then transferred to the outside air heat exchanger 50 through high pressure pipes 42 where the liquid refrigerant is cooled by a flow of outside air over a series of fins, as known in the industry. The now cold, liquid refrigerant, under pressure, flows through the high pressure line 74 to both the thermal storage 20 and the evaporators 70.

In one mode of operation, the cold, liquid refrigerant flows through the heat transfer tubes 82 within the thermal storage 20. As the refrigerant changes state from a liquid to a gas (evaporates) within the heat transfer tubes 82, heat is extracted from the material 90 within the thermal storage 20, lowering the temperature of the material 90. At a certain temperature (freezing point of the material 90 based upon the physical properties of the material 90), the material 90 changes phase from a liquid to a solid. This phase change requires cooling energy above that needed to simply lower the temperature of the material 90, and therefore, stores that additional energy until the now solid material 90 warms above a certain temperature (melting point based upon the physical properties of the material 90).

Note that many typical components of a traditional air conditioning compressor 40 and outside air exchanger 50 such as reversing valves, thermal expansion devices, check valves, fans/motors to flow air over the fins, fins, etc., are not shown for clarity purposes as they are well known in the art.

The inside air handler 70 (coils, fins, motors not shown for clarity reasons) is located in the structure to be cooled such as in a living space, freezer compartment, refrigerator, vehicle passenger compartment, etc. When the compressor 40 is operating, the inside air handler receives cooled, liquid refrigerant through the second high-pressure line 74. The liquid refrigerant evaporates (changes state to a gas refrigerant) within the coils of the inside air handler 70 thereby extracting heat (e.g., cooling) air that flows through the coils. The now gaseous refrigerant exits the inside air handler 70 through the suction line 72 and is again compressed by the compressor(s) 40, etc.

When the compressor 40 is operating, thereby phase changing and compressing the refrigerant from a gaseous state to a high pressure, cold state and routing the high pressure, cooled refrigerant through the first high-pressure line 74 and into the inside air handler 70. At the same time, some of the cooled refrigerant enters the thermal storage 20, either further cooling the material 90 or cooling the material 90 sufficiently to cause at least some of the material 90 to phase change into a solid. In some embodiments, a valve 31 (e.g. solenoid valve 31) is opened when conditions are right for charging the thermal storage 20 such as when electricity rates are low or when outside ambient temperatures are favorable. When the valve 31 is closed, all high pressure, cooled refrigerant is directed to the air handler 70 to cool the structure. In embodiments, the valve 31 is closed when electricity rates are high or when outside ambient temperatures are not favorable.

At such times when sufficient cold heat is stored in the thermal storage 20 and it is determined that it is not favorable to operate the compressor(s) 40 (e.g. during high cost electricity periods or higher outside ambient temperatures), instead of operating the compressor(s) 40, a pump 34 (e.g., a LPA Liquid Pressure Amplification) pump 34) is operated to pump liquid refrigerant through a collection tube 22 from the thermal storage and into the high pressure line 74 through a high pressure connecting tube 28. This liquid refrigerant enters the inside air handler 70 and evaporates in the coils within the inside air handler 70, thereby extracting heat from air passing over these coils (e.g., cooling). The now gaseous refrigerant flows back into the thermal storage 20 through the low pressure tube 72, where it interacts with the low temperatures within the material 90 of the thermal storage 20, thereby condensing back into a liquid refrigerant.

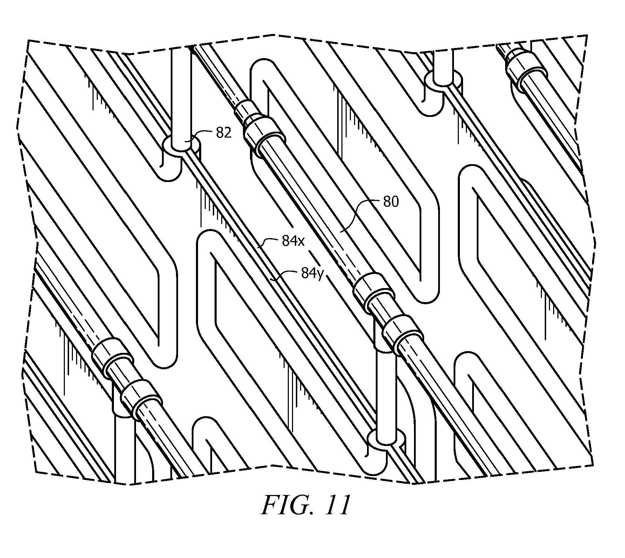

Referring to FIGS. 3 and 5, perspective views of the internals of the auxiliary thermal storage 20 are shown. Within the thermal storage 20, are a series of thermal fins 84 having one or more heat transfer tubes 82. An example of the construction of such thermal fins 84 and heat transfer tubes 82 are shown in FIG. 11.

At a lower end of the heat transfer tubes 82 (lower with respect to gravity) is a high-pressure thermal storage collection tube 86 through which, cool liquid refrigerant is collected by the plurality of heat transfer tubes 82 through forces of gravity.

The volume of thermal battery is determined by application, for example, in some embodiments, the volume is one square meter.

In the embodiment shown, the heat transfer tubes 82 are mounted on plates 84 and the heat transfer tubes 82 are thermally interfaced to the plates 84, although in other embodiments it is anticipated that the heat transfer tubes are without plates 84. By thermally interfacing the heat transfer tubes 82 to the plates 84, cool heat flows readily between the two and into the material 90 within the thermal storage 20.

The material 90 is contained within an outer shell 92 that, preferably, includes a good thermal insulator. It is also preferred that the outer shell 92 be water tight so the material 90 does not exit and, for when materials 90 expand and contract, it is also preferred that the outer shell 92 be structurally sound as to not break under pressure of the material 90. It is anticipated that in some embodiments, the outer shell 92 be a set of layers of sealing materials, thermally insulating materials, and/or structural materials in any order, composition, and combination.

Within the thermal storage 20, are a series of thermal fins 84 having one or more heat transfer tubes 82. At a lower end of the heat transfer tubes 82 (lower by gravity) is a high-pressure thermal storage distribution tube 86 through which, cool liquid refrigerant is distributed to the plurality of heat transfer tubes 82. At an upper end of the heat transfer tubes 82 is a low-pressure exit collection tube 80.

The heat transfer tubes 82 are mounted on plates 84 and the heat transfer tubes 82 are thermally interfaced to the plates 84. By thermally interfacing the heat transfer tubes 82 to the plates 84, cool heat flows readily between the two (e.g., low thermal resistance).

The heat transfer tubes 82 and plates 84 are within a material 90 (e.g., at least partially submerged) and the material is contained in an enclosure 92 that is preferably thermally insulated, thereby keeping cool heat stored within the material 90 from escaping to the ambient outside of the enclosure 92.

Although any number of heat transfer tubes 82 and plates 84 are anticipate, thereby dictating the overall volume and size of the enclosure 92, in one embodiment the thermal storage 20 is approximately three square meters in size. In some embodiments, each plate 84 has 3 parallel heat transfer tubes 82 and a conductance square surface area of around 900 square millimetres on each side. In some embodiments, the heat transfer tubes 82 are made from 3/8" standard refrigeration soft drawn copper tube and are pressed between the plates and bonded as described in FIG. 11. A modular framework holds the plates 84.

The volume of thermal battery is determined by application, for example, in some embodiments, the volume is one square meter.

In the embodiment shown, the heat transfer tubes 82 are mounted on plates 84 and the heat transfer tubes 82 are thermally interfaced to the plates 84, although in other embodiments it is anticipated that the heat transfer tubes are without plates 84. By thermally interfacing the heat transfer tubes 82 to the plates 84, cool heat flows readily between the two and into the material 90 within the thermal storage 20.

The material 90 is contained within an outer shell 92 that, preferably, includes a good thermal insulator. It is also preferred that the outer shell 92 be water tight so the material 90 does not exit and, for when materials 90 expand and contract, it is also preferred that the outer shell 92 be structurally sound as to not break under pressure of the material 90.

Referring to FIGS. 4 and 6, internals of the in-line thermal storage 120 are shown. As discussed with FIGS. 3 and 5, within the thermal storage 120, are a series of thermal fins 84a/84b having one or more heat transfer tubes 82a/82b. There are two independent sets of thermal fins 84a/84b and respective heat transfer tubes 82a/82b. The first set of thermal fins 84a and heat transfer tubes 82a interface to the compressor(s) 40 and outside air handler 50 and, while the compressor(s) 40 operates, the first refrigerant in a liquid state is flows into the first set of heat transfer tubes 82a from the high pressure line 24 and heat is extracted from the material 90 within the thermal storage 120. As heat is extracted, the first refrigerant evaporates within the first set of heat transfer tubes 82a and exits into the suction tube 25 to return to the compressor(s) 40 and outside air handler 50.

The second set of thermal fins 84b and heat transfer tubes 82b interface to the pump 34, an optional storage tank 60, and an inside air handler 70. When cooling is required and the pump 34 operates, the second refrigerant in a liquid state collects (e.g., by gravity) and flows out of the second set of heat transfer tubes 82b to high pressure line 22 which is in fluid communication with either the pump 34 or the storage tank 60. The pump 34 forces the cold, second refrigerant into the inside air handler 70 through high pressure tubes 74 where the second refrigerant evaporates as it extracts heat from air flowing through the inside air handler 70. The now gaseous second refrigerant then flows through the low pressure line 72 back into the second set of thermal fins 84b where the second refrigerant condenses due to the cold temperatures of the material 90.

The heat transfer tubes 82a/82b are mounted on thermal fins 84a/84b and the heat transfer tubes 82a/82b are thermally interfaced to the thermal fins 84a/84b, providing lower thermal resistance between the refrigerants and the material 90 within the thermal storage 120. Although not required, it is preferred that the first set of thermal fins 84a alternate with the second set of thermal fins 84b to equally cool the material 90 within the thermal storage 120 and to equally extract cold heat from the material 90 within the thermal storage 120. Although shown as an equal number of the first thermal fins 84a and the second thermal fins 84b, there is no requirement for an equal number. For example, in some embodiments there are three of the first thermal fins 84a and four of the second thermal fins 84b, etc.

The heat transfer tubes 82a/82b and thermal fins 84a/84b are within a material 90 (e.g., at least partially submerged) and the material is contained in an enclosure 92 that is preferably thermally insulated, thereby keeping cool heat stored within the material 90 from escaping to the ambient outside of the enclosure 92.

Although any number of heat transfer tubes 82a/82b and thermal fins 84a/84b are anticipate, thereby dictating the overall volume and size of the enclosure 92, in one embodiment the thermal storage 120 is approximately one square meters in size. In some embodiments, each thermal fin 84a/84b has 3 parallel heat transfer tubes 82a/82b and a conductance square surface area of around 900 square millimetres on each side. In some embodiments, the heat transfer tubes 82a/82b are made from 3/8" standard refrigeration soft drawn copper tube and are pressed between the plates and bonded as shown in FIG. 11. It is anticipated, though not required, that a modular framework supports the thermal fins 84a/84b, maintaining proper location and separation.

The material 90 is selected, for example, as an antifreeze and water solution of a specific concentration that will provide the desired freezing and operating temperature.

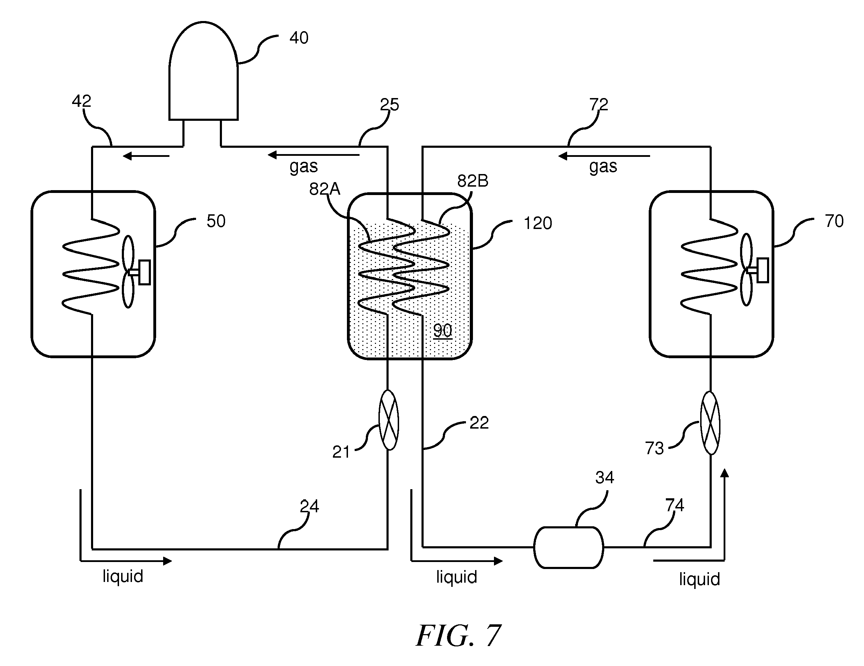

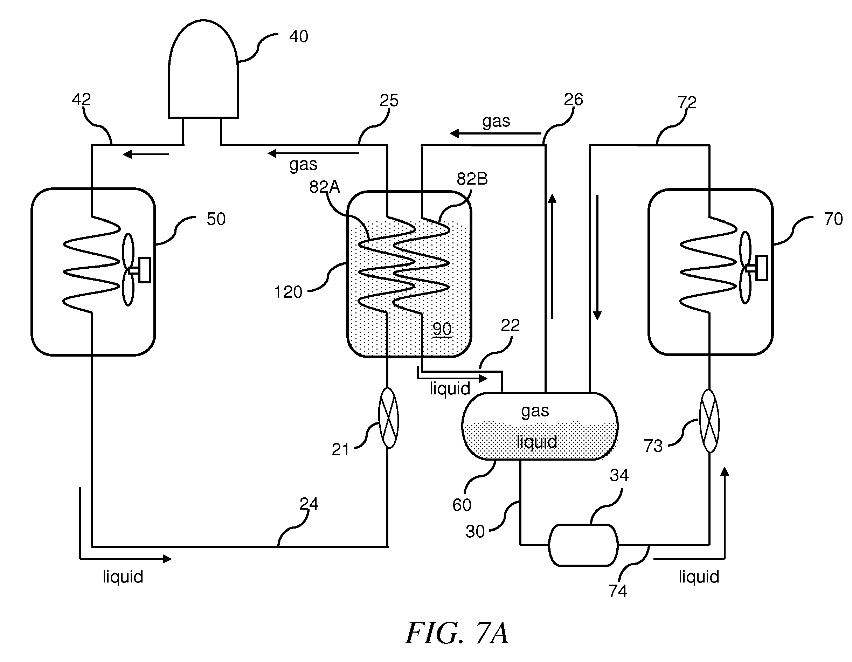

Referring to FIGS. 7 and 7A, schematic views of in-line air conditioning system 10 a with in-line thermal storage 120 are shown. In the in-line air conditioning system 10 with thermal storage 120, the thermal storage 120 has two banks of heat transfer tubes 82a/82b for transferring cold heat to/from a refrigerant there within. The first set of the heat transfer tubes 82a transfer refrigerant to/from the compressor(s) 40 and outside air handler 50. The second set of heat transfer tubes 82b transfer refrigerant to/from the inside air handler 70 by way of the pump 34. In this way, two independent types and chemistries of refrigerant are allowed, though in some embodiments, the refrigerant flowing through the first set of heat transfer tubes 82a is the same refrigerant flowing through the second set of heat transfer tubes 82b.

The in-line air conditioning system includes thermal storage 120 as described with FIGS. 4 and 6. The in-line air conditioning system includes one or more typical compressors 40. The compressor(s) 40 have a low pressure suction line (vapor inlet line) 25 through which warm, gaseous refrigerant is received from the thermal storage 120. The compressors 40 then compress this gaseous refrigerant into a liquid state at a high pressure which is then travels through tubes 42 and through the outside air heat exchanger 50 where the liquid refrigerant is cooled by a flow of outside air over a series of fins (not shown), as known in the industry. The now cold, liquid refrigerant, under pressure, flows through the high pressure line 24 and into the thermal storage 120. As the cold, liquid refrigerant flows through the first set of the heat transfer tubes 82a within the thermal storage 120, the refrigerant changes state from a liquid to a gas (evaporates), extracting heat (thermal energy) from the material 90 within the thermal storage 120, lowering the temperature of the material 90. At a certain temperature (freezing point of the material 90 based upon the physical properties of the material 90), the material 90 changes phase from a liquid to a solid. This phase change requires cooling energy above that needed to simply lower the temperature of the material 90, and therefore, stores that additional energy until the now solid material 90 warms above a certain temperature (melting point based upon the physical properties of the material 90). For completeness, an optional thermal expansion valve 21 is shown

An inside air handler 70 (coils, fins, motors not shown for clarity reasons) is located in the structure to be cooled such as in a living space, freezer compartment, refrigerator, vehicle passenger compartment, etc. The inside air handler 70 is similar or the same as such known in the industry.

In the example of FIG. 7, the compressor 40 is operated at a time desired (e.g. when electricity rates are lower) until the material 90 within the thermal storage 120 achieves the desired temperature. While the compressor 40 runs, cold first refrigerant from the compressor 40 and outside air handler 50 flows through the first set of heat transfer tubes 82a within the thermal storage 120 and cools and/or freezes the material 90 within the thermal storage 120. Once the desired temperature of the material 90 within the thermal storage 120 is achieved, the compressor 40 is stopped, requiring little or no further power.

Now, as the second refrigerant in gaseous form enters the thermal storage 120, the second refrigerant contacts the cold second set of heat transfer tubes 82b and condenses into a liquid and collects at the bottom of the heat transfer tubes 82b into a transfer tube 22 by gravitational force.

When cooling is required within the structure as determined by, for example, a thermostat or other temperature sensing device, the condensed, liquefied second refrigerant from the thermal storage 120 is pumped from the transfer tube 22 and into the inside air handler 70 through a high pressure line 74. The inside air handler 70 receives the cooled, liquid second refrigerant through the second high-pressure line 74 and the liquid second refrigerant evaporates (changes state to a gas refrigerant) within the coils of the inside air handler 70, providing cool air within the structure (e.g., home, office, refrigerator). The now gaseous second refrigerant exits the inside air handler 70 through a second suction line 72 and returns to the thermal storage 120 where it is again cooled and liquefied.

Again, as the temperature of the material 90 within the thermal storage 120 rises, determinations are made as to whether the compressor 40 should be run. For example, if the outside air temperature is at an ideal temperature or if electricity rates are low, the compressor is run to cool the material 90 to the desired temperature. If the conditions are not right (e.g. electricity rates are high or outside air temperatures are not ideal), running of the compressor 40 is suppressed until cooling is no longer possible with the remaining cold heat energy stored in the thermal storage 120.

In the example of FIG. 7A, the compressor 40 is operated at a time desired (e.g. when electricity rates are lower) until the material 90 within the thermal storage 120 achieves the desired temperature (e.g., phase changes into a solid). While the compressor 40 runs, cold first refrigerant from the compressor 40 and outside air handler 50 flows through the first set of heat transfer tubes 82a within the thermal storage 120 and cools and/or freezes the material 90 within the thermal storage 120. Once the desired temperature of the material 90 within the thermal storage 120 is achieved, the compressor 40 is stopped, requiring little or no further power.

Now, as the second refrigerant in gaseous form enters the thermal storage 120, the second refrigerant contacts the cold second set of heat transfer tubes 82b and condenses into a liquid. The condensed, cold liquefied second refrigerant collects by gravity and flows through tubes 22 into a storage tank 60 (preferably insulated storage tank 60 or a Liquid Refrigerant Receiver 60 as known in the industry). As any of the second refrigerants within the storage tank 60 evaporate, the gaseous second refrigerant flows through another tube 26 back into the thermal storage 120 where is it then condensed as described above.

The liquefied second refrigerant within the storage tank 60 is in fluid communications with a pump 34 through a tube 30. When cooling is required within the structure as determined by, for example, a thermostat or other temperature sensing device, the condensed, liquefied second refrigerant from the storage tank 60 is pumped into the inside air handler 70 through a high pressure line 74 and optionally, a thermal expansion valve 73. The inside air handler 70 receives the cooled, liquid second refrigerant through the second high-pressure line 74 and the liquid second refrigerant evaporates (changes state to a gas refrigerant) within the coils of the inside air handler 70. The now gaseous second refrigerant exits the inside air handler 70 through a second suction line 72 and returns to the storage tank 60, and eventually to the thermal storage 120 where it is again cooled and liquefied. Again, an optional thermal expansion valve 73 is shown for completeness.

As the temperature of the material 90 within the thermal storage 120 rises, determinations are made as to whether the compressor 40 should be run. For example, if the outside air temperature is at an ideal temperature or if electricity rates are low, the compressor is run to cool the material 90 to the desired temperature. If the conditions are not right (e.g. electricity rates are high or outside air temperatures are not ideal), running of the compressor 40 is suppressed until cooling is no longer possible with the remaining cold heat energy stored in the thermal storage 120.

In a preferred embodiment, the liquid pump 34 is an LPA (Liquid Pressure Amplification) pump 34. Although a single thermal storage 120 is shown in FIGS. 1 and 1A, smaller, larger, serial and/or parallel thermal storage 120 are anticipated.

In some embodiments, the material 90 within the thermal storage is a chemical-based antifreeze material such as ethylene glycol or a mixture of such antifreeze material and water for achieving the desired phase change temperature (e.g., freezing point). In some embodiments, the material 90 is made of a non-global warming fluid that is processed from the vegetable beetroot. There is no limitation to the material 90. By varying the antifreeze concentration level of the material 90, the antifreeze eutectic freezing level is set as desired. For example, a higher eutectic freezing temperature is used in air conditioning for chilling in the range of 25F to 30F, while a medium eutectic freezing temperature is used in air conditioning for chilling in refrigerators in the range of 15 to 20F as needed for fresh meats, dairy products, and a low eutectic freezing temperature is used in air conditioning for chilling in refrigerators in the range of 35F to -18F, typically in freezers for frozen meats, fish, poultry, etc.

It is fully anticipated that the first refrigerant be the same or different to the second refrigerant and either refrigerant is any know refrigerant in the industry. As a first example, the first refrigerant is Co2 fluid (R-744) and the second refrigerant is propane or ammonia (Nh3). As a second example, both the first refrigerant and second refrigerant is Co2 fluid (R-744).

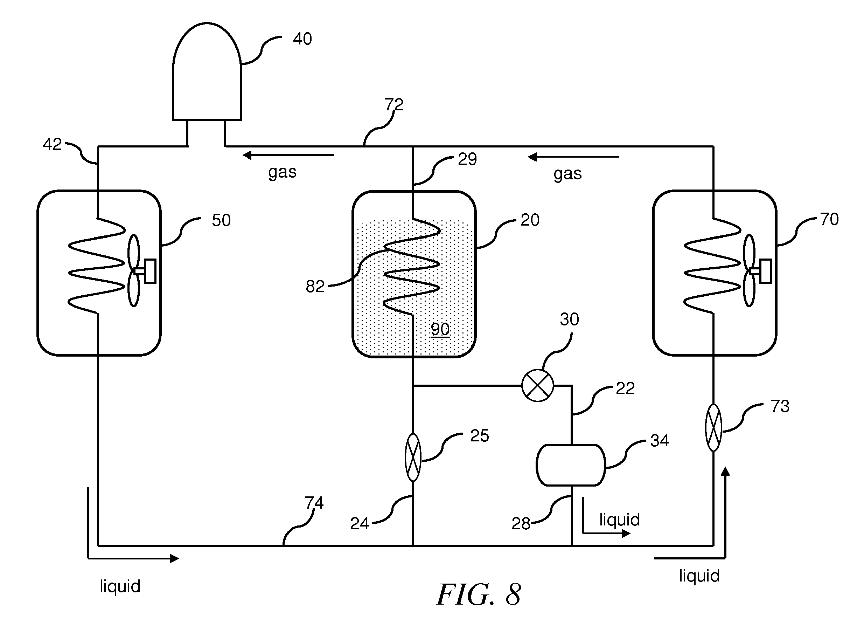

Referring to FIG. 8, a schematic view of the air conditioning system 10 with auxiliary thermal storage 20 is shown. It is envisioned that, in some embodiments, the auxiliary air conditioning system 10 adds thermal storage 20 to an existing air conditioning system and, therefore, it is anticipated that the thermal storage 20 be integrated into any new or existing air conditioning system.

The compressor 40 receives warm, gaseous refrigerant from the thermal storage 20 through the low pressure suction line (vapor inlet line) 72 and/or the inside air handlers 70. The compressor 40 then compress this gaseous refrigerant into a liquid state at a high pressure which is then transferred to the outside air heat exchanger 50 through high pressure pipes 42 where the liquid refrigerant is cooled by a flow of outside air over a series of fins, as known in the industry. The now cold, liquid refrigerant, under pressure, flows through the high pressure line 74 to both the thermal storage 20 and the evaporators 70.

In one mode of operation, the cold, liquid refrigerant flows through the heat transfer tubes 82 within the thermal storage 20. As the refrigerant changes state from a liquid to a gas (evaporates) within the heat transfer tubes 82, heat is extracted from the material 90 within the thermal storage 20, lowering the temperature of the material 90. At a certain temperature (freezing point of the material 90 based upon the physical properties of the material 90), the material 90 changes phase from a liquid to a solid. This phase change requires cooling energy above that needed to simply lower the temperature of the material 90, and therefore, stores that additional energy until the now solid material 90 warms above a certain temperature (melting point based upon the physical properties of the material 90), at which time the cool heat energy is released.

The inside air handler 70 (coils, fins, motors not shown for clarity reasons) is located in the structure to be cooled such as in a living space, freezer compartment, refrigerator, vehicle passenger compartment, etc. When the compressor 40 is operating, the inside air handler receives cooled, liquid refrigerant through the high-pressure line 74. The liquid refrigerant evaporates (changes state to a gas refrigerant) within the coils of the inside air handler 70 thereby cooling air that flows through the coils. The now gaseous refrigerant exits the inside air handler 70 through the suction line 72 and is again compressed by the compressor 40, etc.

When the compressor 40 is operating, thereby phase changing and compressing the refrigerant from a gaseous state to a high pressure, cold state and routing the high pressure; cooled refrigerant flows through the first high-pressure line 74 and into the inside air handler 70. At the same time, some of the cooled refrigerant enters the thermal storage 20, either further cooling the material 90 or cooling the material 90 sufficiently to cause at least some of the material 90 to phase change into a solid.

At such times when sufficient cold heat is stored in the thermal storage 20 and it is determined that it is not favorable to operate the compressor 40 (e.g. during high cost electricity periods or higher outside ambient temperatures), instead of operating the compressor 40, a optional valve 30 (e.g. solenoid valve 30) is opened and a pump 34 (e.g., a LPA Liquid Pressure Amplification pump 34) is operated to pump liquid refrigerant through a collection tube 22 from the thermal storage 20 and into the high pressure line 74 through a high pressure connecting tube 28. This liquid refrigerant enters the inside air handler 70 and evaporates in the coils within the inside air handler 70, thereby extracting heat from air passing over these coils (e.g., cooling). The now gaseous refrigerant flows back into the thermal storage 20 through the low pressure tube 72, where it interacts with the low temperatures within the material 90 of the thermal storage 20, thereby condensing back into a liquid refrigerant.

Although one valve 30 is shown, any number of valves are anticipated to control the flow of the refrigerant. For example, in some embodiments, a valve is inserted in the high pressure line 24 between the high pressure line 74 and the thermal storage 20 to prevent cold, liquid refrigerant from flowing into the thermal storage 20 during periods of high electricity costs, and opened when conditions are right for storing cold heat in the thermal storage 20. Likewise, it is anticipated that in some embodiments, another valve or a check valve is inserted in the high pressure line 74 towards the outside air handler 50 to prevent the cold, liquid refrigerant from flowing from the pump 34 back into the outside air handler 50.

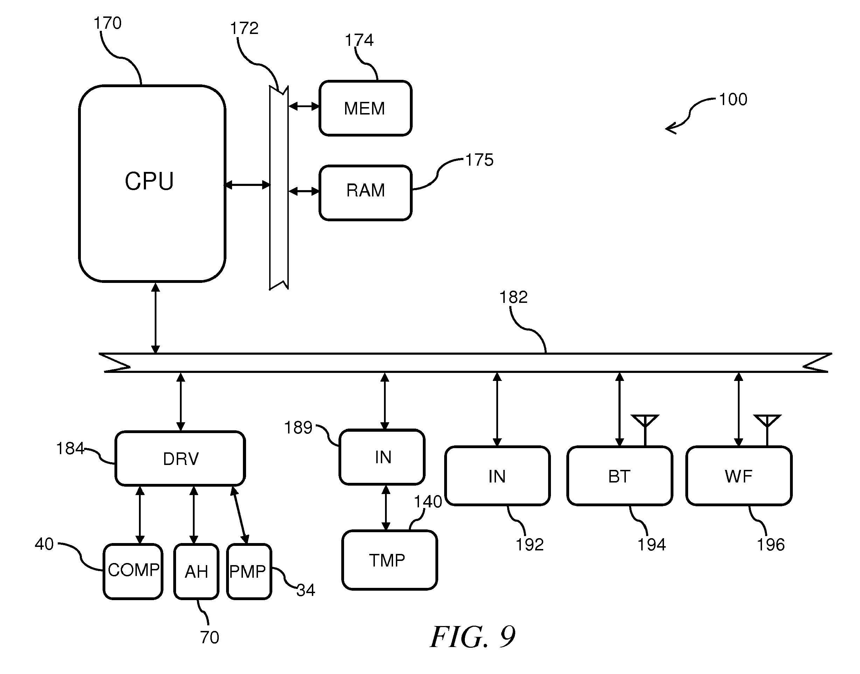

Referring to FIG. 9, a schematic view of an exemplary processing device 100 as used within the air conditioning system 10 with thermal storage 20/120 is shown. The exemplary processing device 100 represents a typical processor system as used with the air conditioning system 10 with thermal storage 20/120, though it is known in the industry to utilize logic in place of processors and vice versa. This exemplary processing device 100 is shown in its simplest form. Different architectures are known that accomplish similar results in a similar fashion and the air conditioning system 10 with thermal storage 20/120 is not limited in any way to any particular system architecture or implementation. In this exemplary processing device 100, a processor 170 executes or runs programs from a random access memory 175. The programs are generally stored within a persistent memory 174 and loaded into the random access memory 175 when needed. The processor 170 is any processor, typically a processor designed for portable devices. The persistent memory 174, random access memory 175 interfaces through, for example, a memory bus 172. The random access memory 175 is any memory 175 suitable for connection and operation with the selected processor 170, such as SRAM, DRAM, SDRAM, RDRAM, DDR, DDR-2, etc. The persistent memory 174 is any type, configuration, capacity of memory 174 suitable for persistently storing data, for example, flash memory, read only memory, battery-backed memory, magnetic memory, etc. In some exemplary processing devices 100, the persistent memory 174 is removable, in the form of a memory card of appropriate format such as SD (secure digital) cards, micro SD cards, compact flash, etc.

Also connected to the processor 170 is a system bus 182 for connecting to peripheral subsystems such as output drivers 184 and inputs 189/192 such as inputs from a temperature sensor 140 or other controls, etc. The output drivers 184 receive commands from the processor 170 and control the operation of the various components of the air conditioning system 10 with thermal storage 20/120, for example, the compressor 40, the air handler 70 and the pump 34.

In general, some portion of the memory 174 is used to store programs, executable code, and data. In some embodiments, other data is stored in the memory 74 such as tables and settings, etc.

The peripherals and sensors shown are examples and other devices are known in the industry such as Global Positioning Subsystems, speakers, microphones, USB interfaces, Bluetooth transceivers 94, Wi-Fi transceivers 96, image sensors, temperature sensors, etc., the likes of which are not shown for brevity and clarity reasons.

In some embodiments, the exemplary processing device 100 interfaces to a wireless transmitter or transceiver (e.g., Bluetooth radio transceiver 94, a Wi-Fi radio transceiver 96, or both) for communication with local wireless devices such as personal computers and wireless sensors/thermostats.

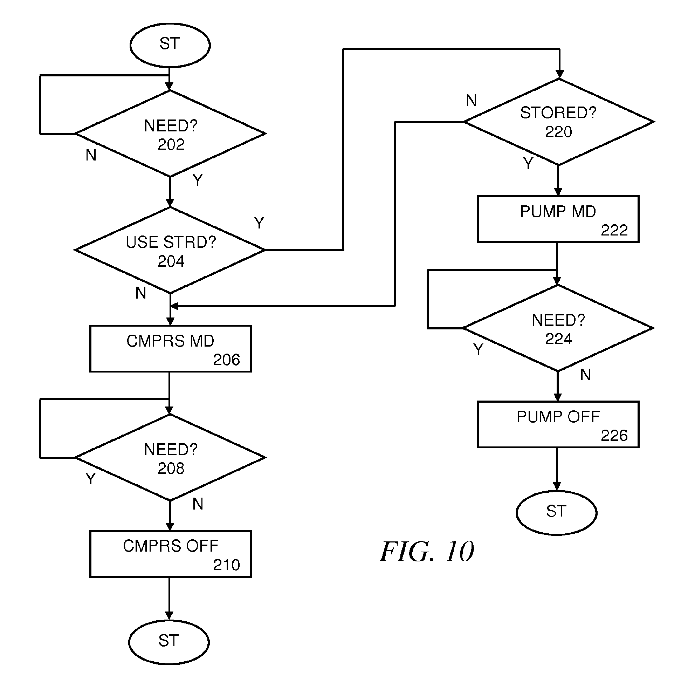

Referring to FIG. 10, a flow chart of an exemplary software system running on processing device 100 as used in conjunction with the air conditioning system 10 with thermal storage is shown 20/120.

In this exemplary flow, the system 10 waits 202 until there is a need for cooling (e.g., a temperature within the structure being cooled raises above a programed temperature as measured by a temperature sensor 140). Once the need for cooling is determined 202, a test 204 is made to determine if it is better to use stored cold heat or to capture cold heat from the outside ambient air. As an example, it is better to use stored cold heat when the outside ambient air temperature is above a certain point or when energy rates (e.g. electricity costs) are high (e.g., in areas in which rates vary by time-of-day). If the test 204 concludes that it is best to use stored cold heat, another test 220 is performed to determine is sufficient cold heat is available in the thermal storage 20/120. If either the test 204 determines that it is better to use stored cold heat or the test 220 determines there is not sufficient cold heat is available in the thermal storage 20/120, the compressor 40, outside air handler 50, and inside air handler 70 are operated 206 until the need for cooling abates 208 (e.g., a temperature within the structure being cooled goes below above a second programed temperature as measured by a temperature sensor 140), at which time the compressor 40, outside air handler 50, and inside air handler 70 are shut off.

If the second test 220 determines that there is sufficient cold heat is available in the thermal storage 20/120, instead of operating the compressor 40, the pump 34 and inside air handler 70 are turned on 222 and operate until it is determined 224 that the need for cooling has stopped (e.g., a temperature within the structure being cooled goes below above a second programed temperature as measured by a temperature sensor 140), at which time the pump 34 and inside air handler 70 are turned off 226.

Note, flows shown are examples, as it is known to include additional steps to sequence operations (e.g., starting the fans in the air handlers 50/70 before starting the compressor 40) and delaying operation of the compressor 40 for a period of time after the compressor 40 is stopped to prevent failures. It is also anticipated that any system based on a processor 100 is equally feasible implemented as logic, for example, in a logic array, etc.

Referring to FIG. 11, a perspective view of an exemplary thermal fin design is shown. In this example, three parallel thermal fins 84 are shown comprising two complimentary aluminum sheets 84x/84y. The connecting tube 80 connects individual heat transfer tubes 82. The heat transfer tubes 82 are sandwiched between the complimentary aluminum sheets 84x/84y, thereby providing good thermal conductance between the heat transfer tubes 82/82a/82b and the thermal fins 84/84a/84b. In some embodiments, the heat transfer tubes are 3/8" standard refrigeration soft drawn copper tubes pressed between the complimentary aluminum sheets 84x/84y and bonded. In some embodiments, the heat transfer tubes are copper tubes that are oval in cross-sectional shape instead of the expected round cross-sectional shape.

Although any suitable materials are anticipated, examples of materials for the heat transfer tubes 82/28a/82b are copper or aluminum. Likewise, examples of materials for the thermal fins 84/84a/84b are also copper or aluminum.

It is anticipated that, in some embodiments, the thermal fins 84/84a/84b are supported by a modular framework.

Although described in the above examples as a system for cooling, it is known to reverse such systems and the described examples operate in reverse as expected.

## Claims

1. An air conditioning system comprising:
a compressor;
an outside air handler in fluid communications with the compressor;
a thermal storage having a set of heat transfer tubes, a first end of each of the heat transfer tubes in fluid communications with the outside air handler through a high pressure line and a second end of the heat transfer tubes in fluid communications with the compressor through a suction line;
an inside air handler interface to a structure to be cooled and having an input that is in fluid communications with the outside air handler through the high pressure line and an output that is in fluid communications with the compressor through the suction line;
a fluid pump having an input and an output, the input of the pump in fluid communications with the first end of each of the heat transfer tubes and the output of the pump in fluid communications with the input of the inside air handler;
whereas when the compressor runs, a refrigerant is compressed into a liquid, cooled by the outside air handler and flows through the high pressure line into the heat transfer tubes where the refrigerant cools a material within the thermal storage, the refrigerant also flows into the inside air handler where the refrigerant evaporates, extracting heat from air from within the structure to be cooled, and the refrigerant in gaseous form returns to the compressor through the suction line;
whereas, in a first mode of operation, when cooling is needed, the pump operates and circulates the refrigerant in liquid form from the first end of the heat transfer tubes and into the inside air handler through the high pressure line where the refrigerant extracts heat as it evaporates into a gas and the refrigerant in gaseous form returns to the thermal storage through the suction line and into the second end of the heat transfer tubes where the refrigerant condenses back into a cold liquid; and
whereas in a second mode of operation, when cooling is needed, the compressor operates and circulates the refrigerant in liquid form from the outside air handler and into the inside air handler through the high pressure line where the refrigerant extracts heat as it evaporates into a gas and the refrigerant in the gaseous form flows to the compressor through the suction line where the refrigerant is compressed and cooled back into a cold liquid.

2. The air conditioning system of claim 1, wherein the material is a mixture of antifreeze and water.

3. The air conditioning system of claim 1, wherein the material is a fluid that is derived from the vegetable beetroot.

4. The air conditioning system of any one of claims 1 to 3, further comprising thermal fins, each thermal fin comprising a first side and a second side, each of the heat transfer tubes are sandwiched between the first side and second side of a respective one of the thermal fins.

5. The air conditioning system of any one of claims 1 to 4, further comprising a valve between the input of the pump and the first end of each of the heat transfer tubes, the valve opened in the first mode of operation and closed in the second mode of operation.

6. The air conditioning system of any one of claims 1 to 5, wherein the thermal storage is enclosed in a container that provides a seal for preventing loss of the material and that provides thermal insulation.

7. A method of cooling comprising:
cooling and compressing a refrigerant into a liquid state using a compressor and outside air handler;
flowing the refrigerant in the liquid state through heat transfer tubes that are situated within a thermal storage, the thermal storage at least partially filled with a material, the refrigerant extracting heat from the material as the refrigerant changes state from the liquid into a gas and the refrigerant in gaseous form returning to the compressor; and
flowing the refrigerant in the liquid state into an inside air handler where the refrigerant in liquid form extracts heat from air flowing through the inside air handler as the refrigerant changes into a gaseous state, the refrigerant in the gaseous state then flows back to the compressor where the compressor and outside air handler condenses the refrigerant back into the liquid state.

8. The method of claim 7, further comprising stopping the cooling and compressing and, when cooling is requested, circulating the refrigerant in liquid form from the thermal storage to the inside air handler, the refrigerant evaporating and extracting heat from the air flowing through the inside air handler, and returning the refrigerant in gaseous form back to the thermal storage, thereby condensing of the refrigerant back into the liquid form.

9. The method of claim 7 or claim 8, wherein the material is derived from the vegetable beetroot.

10. An air conditioning system comprising:
a compressor having an input in fluid communications with a suction line and having an output;
an outside air handler, an input of the outside air handler in fluid communications with the output of the compressor and an output of the outside air handler in fluid communications with a high pressure line;
a thermal storage enclosed in a thermally insulated housing and having heat transfer tubes that are at least partially within a material, a first end of the heat transfer tubes in fluid communications with the high pressure line and a second end of the heat transfer tubes in fluid communications with the suction line;
an inside air handler having an input in fluid communications with the high pressure line and having an output in fluid communications with the suction line;
a fluid pump having an input of the pump in fluid communications with the first end of the heat transfer tubes and the fluid pump having an output that is in fluid communications with the high pressure line;
whereas in a first mode of operation when cooling is needed, the compressor runs, a refrigerant is compressed into a liquid, cooled by the outside air handler and flows into the first end of the heat transfer tubes where the refrigerant evaporates, extracting heat from the material within the thermal storage and the evaporated refrigerant returns to the compressor through the suction line and, in parallel, the refrigerant in liquid form flows into the inside air handler where the refrigerant evaporates, extracting heat from air and the evaporated refrigerant returns to the compressor through the suction line; and
whereas, in a second mode of operation, when cooling is needed, the pump operates and circulates a refrigerant in liquid form from the first end of the heat transfer tubes into the inside air handler where the refrigerant extracts heat as it evaporates into a gaseous form and the refrigerant in the gaseous form returns to the second end of the heat transfer tubes within the thermal storage where the refrigerant condenses back into a cold liquid within the heat transfer tubes.

11. The air conditioning system of claim 10, further comprising thermal fins, each of the heat transfer tubes are thermally and physically coupled to a respective one of the thermal fins.

12. The air conditioning system of claim 11, wherein the thermal fins comprise two sides and the heat transfer tubes are sandwiched between the two sides of the thermal fins.

13. The air conditioning system of any one of claims 10 to 12, whereas, in a third mode of operation, when cooling is needed, a valve is closed preventing flow of the refrigerant in liquid form into the thermal storage and the compressor operates and circulates a refrigerant in liquid form from the compressor and outside air handler into the inside air handler where the refrigerant extracts heat as it evaporates into a gaseous form and the refrigerant in the gaseous form returns to the compressor where the refrigerant is compressed and condensed back into a cold liquid.

14. The air conditioning system of any one of claims 10 to 13, whereas, in a fourth mode of operation, when cooling of the thermal storage is needed, the compressor operates and circulates a refrigerant in liquid form from the compressor and outside air handler into the into the first end of the heat transfer tubes where the refrigerant extracts heat from the material as it evaporates into a gaseous form and the refrigerant in the gaseous form returns to the compressor where the refrigerant is compressed and condensed back into a cold liquid.

15. The air conditioning system of claim 14, further comprising valves, the valves preventing flow of the refrigerant through into the inside air handler when cooling is not performed.
